# EUROPÄISCHE PATENTSCHRIFT

(11) **EP 2 934 428 B1**
(45) Veröffentlichungstag und Bekanntmachung des Hinweises auf die Patenterteilung: **22.03.2017**
(21) Anmeldenummer: 13823937.1
(22) Anmeldetag: 23.12.2013
(51) Int. Cl.: A61K 6/02, C04B 41/82, C04B 41/00, C04B 41/46

(54) **VERFAHREN ZUR FESTIGKEITSERHÖHUNG VON KERAMIKEN**
METHOD FOR INCREASING THE STRENGTH OF CERAMICS
PROCÉDÉ POUR AUGMENTER LA RÉSISTANCE DE CÉRAMIQUES

(30) Priorität: 22.12.2012 DE 102012025342
(43) Veröffentlichungstag der Anmeldung: 28.10.2015
(73) Patentinhaber: METOXIT AG, 8240 Thayngen (CH)
(72) Erfinder: KAMPFER, Konrad, CH-8240 Thayngen (CH); ELMAZI, Denis, CH-8200 Schaffhausen (CH)
(74) Vertreter: DTS Zürich
(86) Internationale Anmeldenummer: PCT/EP2013/003938
(87) Internationale Veröffentlichungsnummer: WO 2014/095089

(56) Entgegenhaltungen:
- JP-A- S6 456 386
- CHEMICAL ABSTRACTS, Bd. 114, Nr. 6, 11. Februar 1991 (1991-02-11), Columbus, Ohio, US; abstract no.: 48339s, XP213029 & JP H02 153880 A (INAX CORP) 13. Juni 1990 (1990-06-13)

## Beschreibung

Die Erfindung befasst sich mit einem Verfahren zur Festigkeitserhöhung von Keramiken, insbesondere Oxidkeramiken, insbesondere für technische, medizinische und dentale Anwendungen.

Im Stand der Technik gibt es unterschiedliche Möglichkeiten eine Festigkeitserhöhung von Keramiken zu erzielen. In der Dentalmedizin ist nicht nur die Ästhetik von großer Bedeutung sondern auch die mechanischen Eigenschaften der Keramiken spielen eine entscheidende Rolle. In weiteren medizinischen und technischen Anwendungen ist die Homogenität und die Festigkeit der Keramik ein wichtiges Kriterium.

In der JP 02 153 880 A ist eine Behandlung von kalzinierten Fliesen mit einer Färbelösung, die Zitronensäure enthält, beschrieben.

Nachteilig am Stand der Technik ist, dass die maximale theoretisch mögliche Festigkeit der Keramiken nicht voll ausgeschöpft wird.

Es ist daher Aufgabe der vorliegenden Erfindung, ein Verfahren zur Festigkeitserhöhung von Keramiken vorzusehen, bei dem die Festigkeit der Keramiken gegenüber dem Stand der Technik erhöht ist. Besonders vorteilhaft kann dieses Ergebnis auch mit einem niedrigeren Energieaufwand erreicht werden.

Folglich ist eine Aufgabe der vorliegenden Erfindung, ein Verfahren zur Festigkeitserhöhung von Keramiken anzugeben, bei dem sich eine Erhöhung der Biegefestigkeit und Zuverlässigkeit und damit eine Verbesserung der nutzbaren Festigkeit ergeben.

Diese Aufgabe wird gelöst durch ein Verfahren zur Festigkeitserhöhung von Keramiken gemäß Anspruch 1.

Weiterhin wird diese Aufgabe gelöst durch eine Keramik gemäß Anspruch 12.

Weitere vorteilhafte Ausgestaltungen der vorliegenden Erfindung sind in den abhängigen Ansprüchen angegeben.

Gemäß einem Aspekt der Erfindung ist ein Verfahren zur Festigkeitserhöhung von Keramiken vorgesehen, insbesondere Oxidkeramiken, bevorzugt aus Zirkonoxid, Aluminiumoxid oder deren Mischungen, besonders bevorzugt Dentalkeramiken, umfassend die Schritte
- Bereitstellen einer vorgesinterten Keramik und
- Behandeln der vorgesinterten Keramik mit einer Lösung auf Basis von Carbonsäure, bevorzugt Zitronensäure, wobei die Konzentration der Carbonsäure in der Lösung zwischen 20 und 65 Gew.-%, bevorzugt zwischen 40 und 55 Gew.-% und besonders bevorzugt bei 50 Gew.-% liegt.

Eine vorgesinterte Keramik ist ein Grünling oder ein Weissling, d.h. ein keramischer Formkörper, der bereits mindestens einmal thermisch behandelt worden ist aber noch nicht fertiggesintert wurde. Bevorzugt kann auch das Ausgangsmaterial für den Grünling bereits mit einer Lösung auf Basis von Carbonsäure, bevorzugt Zitronensäure, behandelt werden und daraus erst der Formkörper hergestellt werden, insbesondere gepresst werden.

Die Behandlung der vorgesinterten Keramik mit einer Lösung auf der Basis von Carbonsäure bewirkt bevorzugt eine Infiltration der vorgesinterten Keramik mit dieser Carbonsäure, bevorzugt Zitronensäure. Die so behandelte vorgesinterte Keramik weist die Eigenschaft auf, dass sie sich beim Fertigsintern zu einem stabileren endgesinterten Keramikkörper mit erhöhter Festigkeit sintern lässt.

Bevorzugt weist das Verfahren zusätzlich den Schritt des Einfärbens der porös vorgesinterten Keramiken mit der Lösung auf Basis der Carbonsäure, bevorzugt Zitronensäure, auf, wobei die Lösung bevorzugt auch farbgebende Komponenten umfasst.

Dabei beeinflusst das Einfärben der Keramik in nur geringer Weise die sich einstellende Festigkeit der Keramik. Umgekehrt beeinflusst die sich einstellende Festigkeit der Keramik auch nicht den Einfärbevorgang.

In einer besonders bevorzugten Ausführungsform der Erfindung umfasst das Verfahren den Schritt Endsintern (Fertigsintern, Dichtsintern) der vorgesinterten Keramik.

Der Fertig-Sintervorgang durchläuft dabei bevorzugt mehrere Schritte, während derer sich die Porosität und das Volumen des Grünlings deutlich verringert. Im ersten Schritt bei ca. 1000 °C bis 1200 °C erfolgt lediglich eine Vorverdichtung des Grünlings, wohingegen im zweiten Schritt bei 1200 bis 1400 °C die offene Porosität bereits deutlich verringert wird. Die Festigkeit der Sinterkörper stellt sich dann im dritten Schritt bei ca. 1400 °C bis 1600 °C ein, nach dessen Abschluss die Keramikkörper gänzlich durchgesintert sind, keine Poren mehr und dabei ihre Festigkeit erhalten.

Überraschend wurde bei einem gemäß der Erfindung beschriebenen Verfahren festgestellt, dass die Temperatur im dritten Schritt von 1450 °C auf lediglich 1300 °C gesenkt werden konnte und dabei bei erhöhter Festigkeit ein gleicher Grad beim Dichtsintern erzielt werden konnte. Es ist damit bevorzugt möglich auf den dritten Sinterschritt zu verzichten, da bereits mit dem zweiten Sinterschritt bei ca. 1300 °C der Keramikkörper fertiggeintert ist.

Ausserdem wurde überraschend gefunden, dass die Festigkeit der fertiggesinterten Keramik durch die Behandlung mit der Carbonsäure deutlich gesteigert werden konnte.

Gleichzeitig ist es möglich, neben der Einfärbung der Keramik auch eine Festigkeitserhöhung der Keramik sicherzustellen. Die Einfärbung der Keramik beeinflusst dabei nur geringfügig die sich einstellende Festigkeit der vorgesinterten Keramik und umgekehrt.

In einer weiteren besonders bevorzugten Ausführungsform der Erfindung sind die Keramiken bevorzugt Keramiken für medizintechnische Anwendungen, insbesondere Dentalkeramiken oder technische Keramiken.

Technische Keramiken sind bevorzugt Keramiken für die Lagerung- und Dichtungstechnik, für Gleitringe, für Dichtscheiben, für Drahtzüge, für Rohrumformungen, für Hartbelege, für die Fadenführung, für die Fadenformgebung, zur Herstellung von Garnen, für Schneidutensilien (Messer) und für die Elektrotechnik/Elektronik.

Der Begriff Keramik umfasst neben den Werkstoffen, die für die Herstellung keramischer Produkte verwendet werden, und ihrer Aufbereitung zur eigentlichen Keramik (Tonkeramik, technische Keramik, Verbundkeramik) auch die aus Keramiken geformten und gebrannten Gegenstände selbst, die als Bauteile, Gebrauchs- und Ziergegenstände oder Werkzeuge verwendet werden.

In einer Vorstufe zum Sinterkörper wird ein Grünling zu einem mit Weißkörper" bezeichneten Keramikkörper vorgesintert. Ein Grünling ist ein Körper, welcher vor seiner bestimmungsgemäßen Verwendung durch einen thermischen Prozess verfestigt wird. Bei der Keramikherstellung wird der Grünling im Allgemeinen durch Gießen, plastisches Formen oder Pressen hergestellt. Durch Gießen können komplexe Bauteile formtreu gefertigt werden, durch plastisches Formen, wie beispielsweise Extrudieren, können Bauteile preiswert hergestellt werden. Durch Pressen können große Stückzahlen preiswert hergestellt werden. Beim Vorsintern der Grünlinge zum Weißkörper wird bevorzugt eine Temperatur von 600°C bis 1100°C gewählt.

Bevorzugt weist die Lösung neben der Carbonsäure Wasser und/ oder stabilisierende Alkohole auf. Damit lässt sich die vorgesinterte Keramik zielführend behandeln.

Schwache Säuren dissoziieren in Wasser nur zum Teil, starke Säuren dissoziieren in Wasser dagegen vollständig. Die Säurekonstante bzw. der pKs-Wert ist dabei ein Maß für die Stärke einer Säure. Je kleiner der pKs-Wert umso größer ist die Acidität. Der pks-Wert ist der negative dekatische Logarithmus des pH-Wertes. Bevorzugt weist die Carbonsäure einen pH-Wert von 0,1 - 2,5, bevozugt von 0,4 bis 1,2 und besonders bevorzugt von 0,8 auf.

Durch die in der Lösung enthaltenen farbgebenden Komponenten ist eine gute Verteilung der Komponenten in der Lösung zu erreichen. Damit lässt sich ein gleichmäßig deckender Farbauftrag beim Einfärben der Keramik bewerkstelligen.

Besonders bevorzugt sind die farbgebenden Komponenten in der Carbonsäure gelöst.

Damit ist eine gezielte Verteilung der farbgebenden Komponenten in der Carbonsäure möglich. Die mit den Farbkomponenten angereicherte vorbereitete Carbonsäure kann dann in einer dem Bedarf entsprechenden Lösung gemischt werden.

Bevorzugt weist das Verfahren den Schritt Bearbeiten der vorgesinterten Keramik vor dem Behandeln mit einer Lösung zu einer Gerüstkeramik auf.

Gerüstkeramiken sind Kronen, Brücken und auch Zwischenglieder für die Zahntechnik. Die Gerüstkeramiken werden vor dem Behandeln mit der Lösung aus dem vorgesinerten Keramik-Rohling herausgearbeitet. Bevorzugt ist das Herausarbeiten ein Dreh-, Fräs-, Bohr-, Schleif-, Polier- und/oder Sandstrahlvorgang, der dem Rohling seine entsprechende Form verleiht.

Damit ist es möglich die fertig gefräste Gerüstkeramik mit der Lösung zu behandeln.

Besonders bevorzugt weist das Verfahren den Schritt Einfärben der Keramik durch Eintauchen in die Lösung auf.

Durch den Tauchvorgang der Keramik in die Lösung wird ein Infiltrationsvorgang bei der Keramik bewirkt. Die vorgesinterte Keramik weist dabei bevorzugt eine Porosität auf, die es der Lösung erlaubt, in die vorhandenen Poren des Keramikkörpers teilweise oder vollständig einzudringen/einzuziehen, bis eine bedarfsgerechte Sättigung der Keramik erreicht ist.

Bevorzugt dauert der Tauchvorgang, je nach Größe oder Wandstärke der Keramik, zwischen 3 min und zu 14 h, bis der Infiltrationsvorgang abgeschlossen ist.

Besonders vorteilhaft ist, dass die Farbintensität beim Einfärben mit entsprechenden Bestandteilen in der Lösung allein von der Konzentration der Lösung und nicht, wie beim Stand der Technik, von der Tauchzeit abhängt.

Ebenso besonders vorteilhaft ist, dass die Lösung in die poröse Keramik mit Massen über 10 mm Dicke oder entsprechende Wandstärken teilweise oder vollständig infiltrieren kann.

Weiterhin vorteilhaft ist, dass die Infiltrationslösung auch bei vollständiger Sättigung in der porösen Keramik verbleibt und nicht wieder ausläuft.

Besonders bevorzugt weist das Verfahren den Schritt der Druckbeaufschlagung der Lösung auf die Keramik während des Tauchvorganges auf.

Durch die Druckbeaufschlagung der Lösung auf die Keramik beim Tauchen in die Lösung ist es möglich, die Lösung schneller in die Keramik einzubringen bzw. einzudrücken, so dass der Infiltrationsvorgang beschleunigt erfolgen kann. Mittels der Druckbeaufschlagung ist ein Infiltrieren, je nach Größe der Keramiken bevorzugt innerhalb von 0,5 min bis 5 h möglich, was eine Verkürzung des Infiltrationsvorgangs zur Folge hat.

Besonders bevorzugt weist das Verfahren den Schritt des indiviuellen Einfärbens der Gerüstkeramiken mittels einer Vorrichtung zum Farbauftrag auf.

Die Vorrichtung zum Farbauftrag ist bevorzugt ein Pinsel, ein Stift oder eine Sprühvorrichtung. Damit ist ein gezieltes Einfärben der vorgesinterten Keramik möglich. Besonders bevorzugt lässt sich so auch ein changierender Farbauftrag auf die Keramik bewerkstelligen.

Besonders bevorzugt ermöglicht das Verfahren den Schritt Behandeln der vorgesinterten Keramiken mit mindestens einer weiteren von der ersten Lösung unterschiedlichen Lösung.

Dadurch ist es möglich eine weitere auf der ersten Schicht aufbauende zweite Farbkomponente in die Keramik einzubringen.

Dabei wird die Keramik bevorzugt nur solange infiltriert, bis ein gewisser Grad an Sättigung erreicht ist, d.h. es sind noch freie Poren vorhanden. Dann wird die Keramik in mindestens eine weitere Lösung getaucht, bis eine bedarfsgerechte teilweise oder auch endgültige Sättigung der Keramik erreicht ist, d.h. keine freien Poren vorhanden sind.

Dieser Effekt führt zu einer geschichteten Intensivierung der Farbgebung und einer zusätzlichen Festigkeitserhöhung, wenn beispielsweise die Zitronensäure als erste Carbonsäure verwendet wird.

Besonders bevorzugt sind die farbgebenden Komponenten in der Lösung enthaltene Metallionen oder Metallkomplexe, die die Salze Fe, Cr, Co, Mn, Cu, Pr, Er, Nd oder andere färbende Oxide von Elementen aus der Gruppe seltener Erden, bevorzugt Ammoniumeisencitrat, aufweisen.

In Versuchen hat sich gezeigt, dass mit Oxiden bzw. Salzen von Fe, Cr, Co, Mn, Cu, Pr, Er, Nd oder anderen für die Einfärbung geeigneten Elementen aus der Gruppe seltener Erden die Keramiken sinnvoll eingefärbt werden können.

Bevorzugt wird Ammoniumeisencitrat zum Färben eingesetzt, mit dem gute Ergebnisse erzielbar sind. Ammoniumeisencitrat liegt dabei bevorzugt zwischen 1,5 und 5,0 Gew.-%, besonders bevorzugt zu 2,5 Gew.-% in der Lösung vor.

Besonders bevorzugt liegen in der Lösung die Metallionen zu 0.05 Gew.-% und Metallkomplexe zu 40 Gew.-% vor.

Dadurch ist es möglich, ein homogenes oder geschichtetes Einfärben von Keramikbauteilen, auch mit deutlich größerer Bauteilhöhe bzw. -dicke von 10 mm zu bewerkstelligen.

In Versuchen hat sich gezeigt, dass sich mit diesen Werten für Metallionen und Metallkomplexe gute Einfärberesultate erzielen lassen.

Besonders bevorzugt ist die Carbonsäure unter anderem eine Essigsäure, Buttersäure, Salicylsäure, Aconitsäure oder Zitronensäure. Es ist auch möglich, Kombinationen und Mischungen dieser Säuren zu verwenden.

Besonders bevorzugt ist die Carbonsäure ferner eine Oxalsäure, Fumarsäure, Benzoesäure, Nicotinsäure, Abietinsäure, Ölsäure, Bernsteinsäure, Maleinsäure oder eine Pyrrolidin-II-Carbonsäure sowie Mischungen hiervon.

Dadurch sind mit unterschiedlichen Carbonsäuren ähnliche Festigkeitserhöhungen der einzelnen Keramiken erreichbar.

Ferner führt das Vorsehen unterschiedlicher Carbonsäuren mit Zusatz von farbgebenden Komponenten dazu, die Keramiken unterschiedlich farblich auszugestalten.

Dabei liegt die Konzentration der Carbonsäure in der Lösung zwischen 20 und 65 Gew.-%, bevorzugt zwischen 40 und 55 Gew.-% und besonders bevorzugt bei 50 Gew.-%.

Bei einer Konzentration zwischen 20 und 65 Gew.-% haben sich die besten Ergebnisse für die Festigkeitserhöhung und die Einfärbung unter Verwendung der genannten Carbonsäuren erzielen lassen. Am Beispiel der Zitronensäure als Carbonsäure hat sich bei einem Wert von ca. 50 Gew.-% die höchste Festigkeit und die intensivste Farbgebung feststellen lassen.

Besonders bevorzugt sind die vorgesinterten Keramiken offenporige oxidkeramische Werkstoffe, bevorzugt 3Y-TZP-A, ATZ, Al2O3 in opaker und transluzenter Form, Dispersionskeramiken oder glasphasen gebundene Keramiken.

Oxidkeramische Werkstoffe sind Einstoffsysteme oder Mehrstoffsysteme.

Einstoffsysteme bestehen bevorzugt aus Aluminiumoxid, Magnesiumoxid, Zirkoniumoxid oder Titanoxid.

Mehrstoffsysteme bestehen bevorzugt aus Aluminiumtitanat (Mischform aus Aluminium- und Titanoxid), Mullit (Mischform aus Aluminium- und Siliciumoxid), Bleizirkonattitanat (Piezokeramik), oder aus Dispersionskeramiken, wie mit Zirkoniumoxid verstärktes Aluminiumoxid (ZTA - Zirconia Toughened Aluminum Oxide) - Al₂O₃/ZrO₂ oder durch Aluminiumoxid verstärktes Zirkonoxid (ATZ - Alumina Toughened Zirconia)

Weitere bevorzugte Keramiken enthalten Glasphasen, mit denen die Sintertemperatur herabgesetzt wird. Gleichzeitig wird bei diesen Keramiken auch die Festigkeit reduziert.

Andererseits ist eine Keramik mit einem mittleren oder hohen Gehalt von Zirkonoxid durch erhöhte bzw. hohe Festigkeit charakterisiert. (Beispiele: ZTA, Zirconia Toughened Alumina, 80% Al₂O₃, 20% ZrO₂, Festigkeit bis 1300 MPA; ATZ, Alumina Toughened Zirconia, 80% ZrO₂, 20% Al₂O₃, Festigkeit bis 2000 MPa.)

Bevorzugt liegt die Porosität der Keramiken in etwa bei 10 - 50 Vol.-%, besonders bevorzugt bei 45 Vol.-%. Bei einer Porosität von 45 Vol.-% haben sich in Versuchen gute Ergebnisse erzielen lassen.

Besonders bevorzugt sind die vorgesinterten Keramiken offenporige transluzente oder offenporige opake Keramiken.

Offenporige Keramiken weisen aufgrund ihrer Porosität die Fähigkeit auf, eine Lösung auf Basis von Carbonsäure aufzunehmen, indem sie diese aufsaugen. Dieser Aufnahmeeffekt dauert so lange, bis eine Sättigung der Keramik erreicht ist.

Tranzluzente Keramiken sind solche, die eine Lichtdurchlässigkeit aufweisen.

Die reziproke. Eigenschaft der Transluzenz ist die Opazität. Besitzt ein Stoff also eine hohe Transluzenz, so hat er eine geringe Opazität und umgekehrt.

Mit transluzenten oder opaken Keramiken lassen sich damit unterschiedliche Lichtdurchlässigkeiten bei der Keramikherstellung verwirklichen.

Besonders bevorzugt werden Keramiken durchgehend homogen, geschichtet oder mit Farbverlauf eingefärbt.

Durch das mindestens teilweise Tauchen der Keramiken in verschiedene, farbgebende Infiltrierlösungen ist eine mehrstufige, geschichtete Farbgebung der vorgesinterten Keramiken möglich.

Einfärbung ohne Farbgrenzen - stellt sich beim Tauchvorgang in eine farbgebende Infiltrierlösung ein.

Ein Farbverlauf wird durch das wiederholte, aufeinanderfolgende Tauchen der Keramiken in verschiedene, farbgebende Infiltrierlösungen erreicht.

Gemäß einem weiteren Aspekt der Erfindung ist eine vorgesinterte Keramik, die mit einer Lösung auf Basis von Carbonsäure, insbesondere Zitronensäure, nach dem Vorsintern infiltriert worden ist, wobei die Konzentration der Carbonsäure in der Lösung zwischen 20 und 65 Gew.-%, bevorzugt zwischen 40 und 55 Gew.-% und besonders bevorzugt bei 50 Gew.-% liegt, vorgesehen.

Damit wird eine vorgesinterte Keramik, die mit einer Lösung auf Basis von Carbonsäure behandelt wurde, bereitgestellt. Die vorgesinterte Keramik weist dabei bevorzugt eine Porosität auf, die es der Lösung erlaubt, in die vorhandenen Poren des Keramikkörpers teilweise oder vollständig einzudringen/einzuziehen, so dass ein Infiltrationsvorgang ablaufen kann.

Eine in dieser Weise vorgesinterte Keramik weist nur eine geringe Festigungserhöhung, mit oder ohne eine Einfärbung, gegenüber einer aus dem Stand der Technik bekannten vorgesinterten Keramik auf.

Die Festigkeit einer mit Carbonsäure behandelten und anschließend dichtgesinterten Keramik kann hingegen im Vergleich zu nicht nach dem Verfahren behandelten Keramiken nach dem Dichtsintern mehr als verdoppelt werden.

Weitere Vorteile und Einzelheiten der Erfindung werden anhand der in den Figuren dargestellten Ausführungsbeispiele erläutert.

Die Figuren zeigen im Einzelnen:
- Figur 1: ein Diagramm zur charakteristischen Biegefestigkeit σ₀ dreier Keramikproben A, B, C aus Zirkonoxid mit einem Anteil Aluminiumoxid von 0,05 Gew.-%,
- Figur 2: eine Weibull-Analyse einer nicht infiltrierten Probe mit einem Anteil Aluminiumoxid von 0,05 Gew.-%,
- Figur 3: eine Weibull-Analyse einer infiltrierten Probe ohne Einfärbung mit einem Anteil Aluminiumoxid von 0,05 Gew.-%,
- Figur 4: eine Weibull-Analyse einer infiltrierten Probe mit Einfärbung mit einem Anteil Aluminiumoxid von 0,05 Gew.-%,
- Figur 5: einen Vergleich der Dichten von infiltrierten Proben vs. nichtinfiltrierter Keramikproben aus Figur 1,
- Figur 6: Festigkeiten von unbehandelten Keramiken sowie von infiltrierten bzw. infiltrierten und gefärbten tansluzenten Keramiken aus Figur 1 und
- Figur 7: Weibull-Moduli nicht-infiltrierter, infiltrierter und infiltrierter/eingefärbter, transluzenter Zirkonoxid-Keramiken aus Figur 1.

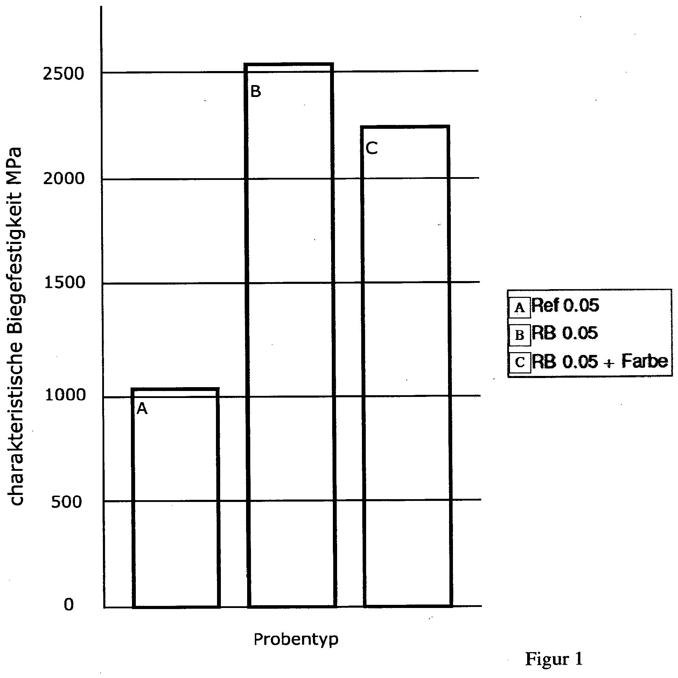

In Figur 1 ist ein Diagramm zur charakteristischen Biegefestigkeit σ₀ dreier Keramikproben A, B, C aus Zirkonoxid mit einem Anteil Aluminiumoxid von 0,05 Gew.-% dargestellt.

Die in der Zahnmedizin oder im technischen Bereich heute bevorzugt verwendeten hochtransluzenten Zirkonoxid Rohlinge unterscheiden sich durch einen reduzierten Aluminumoxidanteil von 0,05 bis 0,1 Gewichtsprozent im Vergleich zu opakem 3-Y-TZP-A mit 0,25% Gewichtprozent Al₂O₃. Typischen Biegefestigkeiten von opakem ZrO2 von ca. 1200 MPa steht eine typische geringere Festigkeit von ca. 800 - 1000 MPa von transluzentem ZrO₂ gegenüber.

Die hier untersuchten transluzenten Ausgangsmaterialen (Proben mit Bezeichnung REF) sind bestimmt durch die Aluminumoxidanteile 0,05 Gew.-% (Probe REF 0.05). Die Festigkeiten des Ausgangsmaterials erreichen 1052 MPa bei Weibull-Moduli m_{cor} von 8,56. Das Vetrauensniveau liegt jeweils bei 90%.

Die transluzenten Materialien, die einer Infiltration unterzogen wurden, tragen die Bezeichnungen RB 0,05 (0,05% Al₂O₃).

Untersucht wird der Einfluss der RB Infiltration porös vorgesinterter Keramik auf die Endsinterfestigkeit. Im Vergleich statischer Biax-Festigkeitsprüfungen (Ball-in-3Ball, ähnlich ISO 6872) mit den REF bezeichneten Proben zeigt sich durch RB-Infiltration eine Festigkeitssteigerung auf 2532 MPa.

Für die Untersuchungen wurden je 30 Probekörper aus Standardscheiben der Firma Metoxit AG verwendet (Z-CAD HD 99-14 HTL Scheiben aus dem identischen Zirkonoxid-Rohstoff), wobei REF die nicht infiltrierte Probenkörper in Standardqualität und RB die infiltrierten Proben bezeichnen.

Die Probekörper für die Festigkeitsbestimmung wurden aus den vorgesinterten Scheiben trocken geschnitten und zu Plättchen (14,0 x 14,0 x 1,5 mm) getrennt. Die Auswertung erfolgt gemäß ISO 6872.

Im Ergebnis ist festzuhalten, dass die Infiltrationsmethode RB die Festigkeit im statischen Biegebruchversuch erheblich erhöht.

Die Versuche haben ferner gezeigt, dass die Infiltration sich nicht negativ auf die Dichte auswirkt.

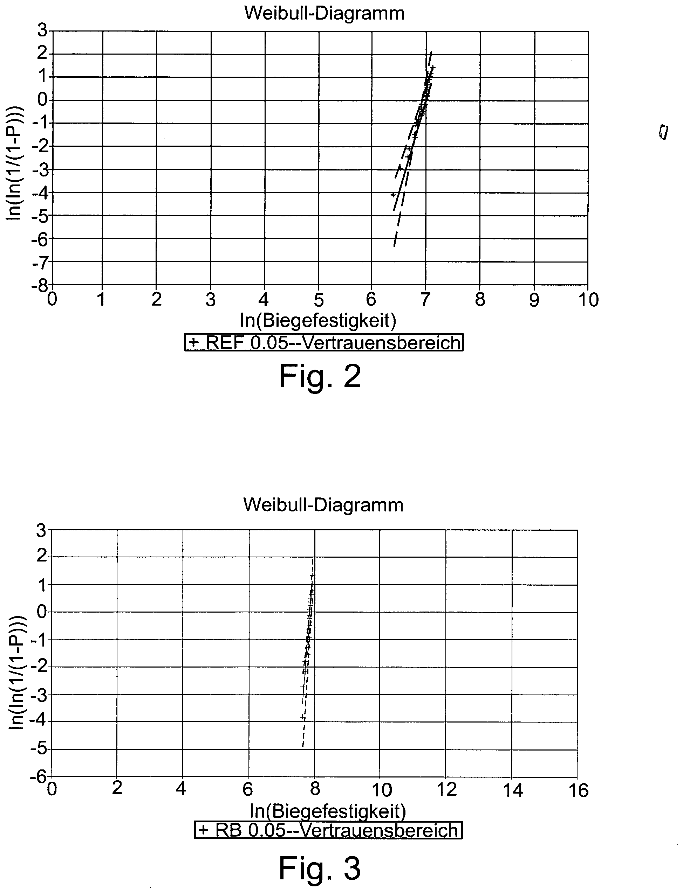

In Figur 2 ist eine Weibull-Analyse einer nicht infiltrierter Probe mit einem Anteil Aluminiumoxid von 0,05 Gew.-% dargestellt.

Die Festigkeit im Biax B3B-Verfahren beträgt 1052 MPa und der Weibull-Modul m = 8,56.

Die Weibull-Verteilung an sich ist eine stetige Wahrscheinlichkeitsverteilung über der Menge der positiven reellen Zahlen, die beispielsweise zur Beschreibung von Lebensdauern und Ausfallhäufigkeiten von bspw. (spröden) Werkstoffen (etwa in der Qualitätssicherung) verwendet wird.

Die Weibull-Verteilung kann zur Beschreibung steigender, konstanter und fallender Ausfallraten technischer Systeme verwendet werden. In der Praxis ist die Weibull-Verteilung neben der Exponentialverteilung, welche ein Spezialfall der allgemeineren Weibull-Verteilung ist, die am häufigsten verwendete Lebensdauerverteilung. Es wird ein hoher Weibull-Modul angestrebt.

In Figur 3 ist eine Weibull-Analyse einer infiltrierten Probe ohne Einfärbung mit einem Anteil Aluminiumoxid von 0,05 Gew.-% dargestellt.

Die Festigkeit im Biax B3B-Verfahren beträgt 2532 MPa und der Weibull-Modul m = 15,37.

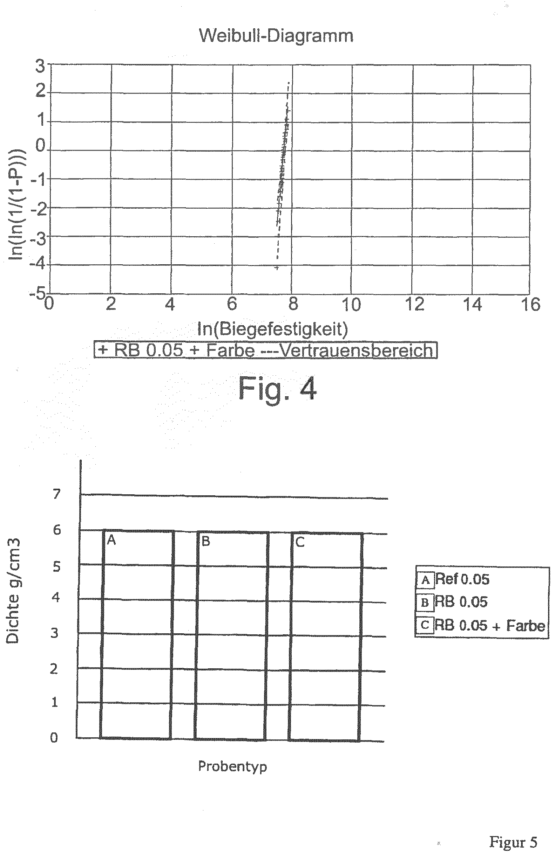

In Figur 4 ist eine Weibull-Analyse einer infiltrierten Probe mit Einfärbung mit einem Anteil Aluminiumoxid von 0,05 Gew.-% dargestellt.

Die Festigkeit im Biax B3B-Verfahren beträgt 2247 MPa und der Weibull-Modul m = 11.79.

Figur 5 zeigt einen Vergleich der Dichten von infiltrierten Proben vs. nichtinfiltrierter Keramikproben aus Figur 1 dargestellt.

Alle Proben A, B, C weisen die gleiche Dichte von 6,09 g/cm³ auf. Die Versuche haben gezeigt, dass sich weder die Infiltration noch das Einfärben negativ auf die Dichte auswirkt.

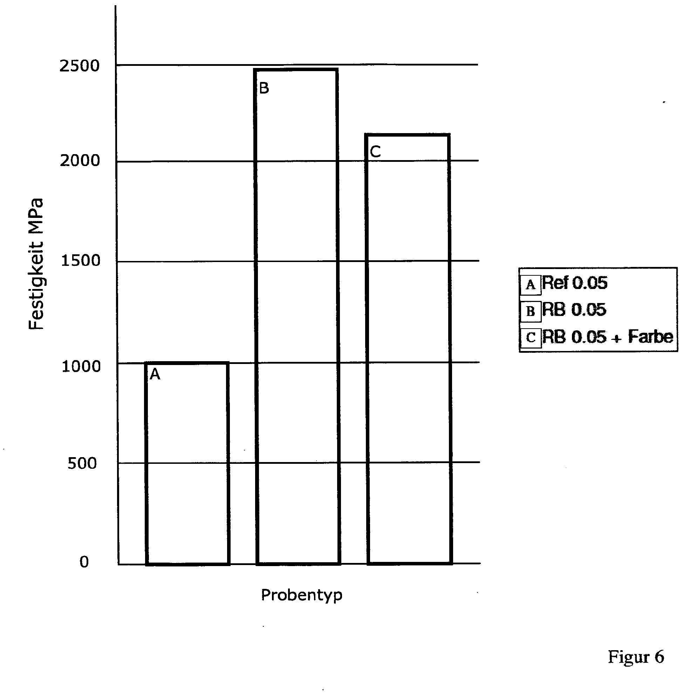

In Figur 6 sind Festigkeiten von unbehandelten Keramiken sowie von infiltrierten bzw. infiltrierten und gefärbten tansluzenten Keramiken aus Figur 1 dargestellt.

Hier sind die Festigkeiten von unbehandelten Keramiken mit den Bezeichnungen REF 0,05 sowie die Festigkeiten von infiltrierter (Bez. RB) bzw. infiltrierten und gefärbter (Bez. RB + Farbe) tansluzenter Keramik gezeigt.

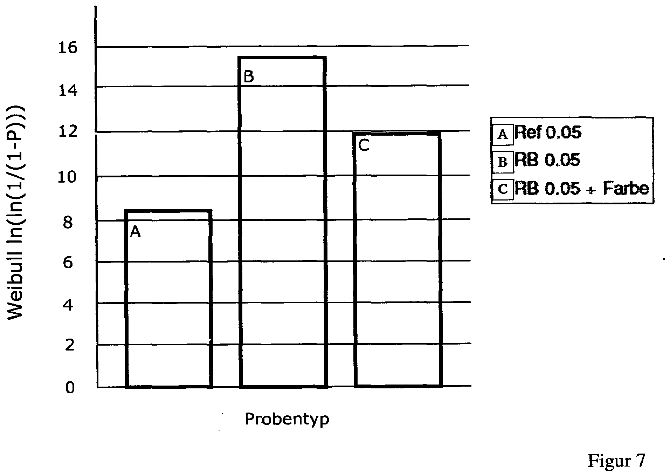

In Figur 7 sind die Weibull-Moduli nicht-infiltrierter, infiltrierter und infiltrierter/eingefärbter, transluzenter Zirkonoxid-Keramiken aus Figur 1 dargestellt.

Der Weibull-Modul ist ein Mass für die Homogenität und damit der Zuverlässigkeit bezüglich der Festigkeit der Keramiken. Daher wird ein hoher Festigkeitswert bei hohem Weibull-Modul angestrebt. Die Weibull-Moduli der infiltrierten Proben sind deutlich höher als die der nicht infiltrierten mit der Konsequenz, dass die Zuverlässigkeit der infiltrierten Keramiken im Vergleich zu den nicht-infiltrierten Keramiken außerordentlich erhöht wird.

Es zeigt sich damit, dass unter Verwendung von konzentrierten starken Carbonsäuren ein Verfahren bereitgestellt wird, mit dem keramische Bauteile im vorgesintertem Zustand so behandelt werden können, dass dadurch die mechanischen Festigkeiten und Zuverlässigkeiten im dichtgesinterten Zustand massiv gesteigert werden können. Das optionale Einfärben der vorgesinterten Keramiken beeinflusst darüber hinaus ebenfalls kaum die Festigkeitserhöhung der fertiggesinterten Keramiken.

Weiterhin zeigen Untersuchungen, dass infitrierte Keramiken, insbesondere Mischkeramiken aus Zirkonoxid und Aluminiumoxid bei geringerer Sintertemperatur, als bisher allgemein bekannt, die Solldichte und damit die endgültige Dichtesinterung erreichen.

Desweiteren wird eine deutliche Festigkeitssteigerung auch bei infiltrierten hochreinen Aluminiumoxidkeramiken festgestellt.

## Patentansprüche

1. Verfahren zur Festigkeitserhöhung von Keramiken, insbesondere Oxidkeramiken, bevorzugt aus Zirkonoxid, Aluminiumoxid oder deren Mischungen umfassend die Schritte
- Bereitstellen einer vorgesinterten Keramik und
- Behandeln der vorgesinterten Keramik mit einer Lösung auf Basis von Carbonsäure, bevorzugt Zitronensäure, wobei die Konzentration der Carbonsäure in der Lösung zwischen 20 und 65 Gew.-%, bevorzugt zwischen 40 und 55 Gew.-% und besonders bevorzugt bei 50 Gew.-% liegt.

2. Verfahren zur Festigkeitserhöhung von Keramiken, gemäß Anspruch 1, ferner umfassend den Schritt
- Endsintern der mit der Lösung auf Basis von Carbonsäure behandelten, vorgesinterten Keramik.

3. Verfahren zur Festigkeitserhöhung von Keramiken, gemäß einem der vorherigen Ansprüche, wobei die Keramiken Dentalkeramiken oder technische Keramiken sind.

4. Verfahren zur Festigkeitserhöhung von Keramiken, gemäß einem der vorherigen Ansprüche, ferner umfassend den Schritt
- Bearbeiten der vorgesinterten Keramik vor dem Behandeln mit einer Lösung zu einer Gerüstkeramik.

5. Verfahren zur Festigkeitserhöhung von Keramiken gemäß einem der vorherigen Ansprüche, ferner umfassend den Schritt
- Behandlung der Keramik durch Eintauchen in die Lösung.

6. Verfahren zur Festigkeitserhöhung von Keramiken gemäß Anspruch 5, ferner umfassend den Schritt
- Druckbeaufschlagung der Lösung auf die Keramik während des Tauchvorganges.

7. Verfahren zur Festigkeitserhöhung von Keramiken gemäß einem der vorherigen Ansprüche, ferner umfassend den Schritt
- Behandeln der vorgesinterten Keramik mit mindestens einer weiteren von der ersten Lösung unterschiedlichen Lösung.

8. Verfahren zur Festigkeitserhöhung von Keramiken gemäß einem der vorherigen Ansprüche, wobei die Carbonsäure eine Essigsäure, Buttersäure, Salicylsäure, Aconitsäure oder Zitronensäure ist.

9. Verfahren zur Festigkeitserhöhung von Keramiken gemäß einem der vorherigen Ansprüche, wobei die vorgesinterten Keramiken offenporige oxidkeramische Werkstoffe, bevorzugt 3Y-TZP-A, ATZ, Al2O3 in opaker und transluzenter Form, Dispersionskeramiken oder glasphasen gebundene Keramiken sind.

10. Verfahren zur Festigkeitserhöhung von Keramiken gemäß einem der vorherigen Ansprüche, wobei in der Lösung farbgebende Komponenten enthalten sind.

11. Verfahren zur Festigkeitserhöhung von Keramiken gemäß einem der vorherigen Ansprüche, ferner umfassen den Schritt
- Einbringen farbgebender Komponenten in gelöster Form in die Keramik durch Tauchen oder Infiltrieren mit oder ohne Druckbeaufschlagung.

12. Vorgesinterte Keramik, die mit einer Lösung auf Basis von Carbonsäure, insbesondere Zitronensäure, nach dem Vorsintern infiltriert worden ist, wobei die Konzentration der Carbonsäure in der Lösung zwischen 20 und 65 Gew.-%, bevorzugt zwischen 40 und 55 Gew.-% und besonders bevorzugt bei 50 Gew.-% liegt.

## Claims

1. Method for increasing the strength of ceramics, in particular oxide ceramics, preferably made of zirconium oxide, aluminium oxide or mixtures thereof, comprising the steps of
- provision of a pre-sintered ceramic and
- treatment of the pre-sintered ceramic with a solution based on carboxylic acid, preferably citric acid, wherein the concentration of the carboxylic acid in the solution is between 20 and 65 wt.-%, preferably between 40 and 55 wt.-% and is particularly preferably 50 wt.-%.

2. Method for increasing the strength of ceramics according to claim 1, further comprising the step of
- final sintering of the pre-sintered ceramic treated with the solution based on carboxylic acid.

3. Method for increasing the strength of ceramics according to one of the preceding claims, wherein the ceramics are dental ceramics or technical ceramics.

4. Method for increasing the strength of ceramics according to one of the preceding claims, further comprising the step of
- processing of the pre-sintered ceramic before the treatment with a solution to form a framework ceramic.

5. Method for increasing the strength of ceramics according to one of the preceding claims, further comprising the step of
- treatment of the ceramic by immersion in the solution.

6. Method for increasing the strength of ceramics according to claim 5, further comprising the step of
- pressurized application of the solution onto the ceramic during the immersion process.

7. Method for increasing the strength of ceramics according to one of the preceding claims, further comprising the step of
- treatment of the pre-sintered ceramic with at least one further solution which is different from the first solution.

8. Method for increasing the strength of ceramics according to one of the preceding claims, wherein the carboxylic acid is an acetic acid, butyric acid, salicylic acid, aconitic acid or citric acid.

9. Method for increasing the strength of ceramics according to one of the preceding claims, wherein the pre-sintered ceramics are oxide-ceramic materials with open pores, preferably 3Y-TZP-A, ATZ, Al2O3 in opaque or translucent form, dispersion ceramics or glass-phase bonded ceramics.

10. Method for increasing the strength of ceramics according to one of the preceding claims, wherein chromophoric components are contained in the solution.

11. Method for increasing the strength of ceramics according to one of the preceding claims, further comprising the step of
- introduction of chromophoric components in dissolved form into the ceramic by immersion or infiltration with or without application of pressure.

12. Pre-sintered ceramic which was infiltrated with a solution based on carboxylic acid, in particular citric acid, after the pre-sintering, wherein the concentration of the carboxylic acid in the solution is between 20 and 65 wt.-%, preferably between 40 and 55 wt.-% and is particularly preferably 50 wt.-%.

## Revendications

1. Procédé pour augmenter la résistance de céramiques, notamment de céramiques oxydées, de façon préférée à partir d'oxyde de zirconium, d'oxyde d'aluminium ou leurs mélanges, comprenant les étapes suivantes :
- mise à disposition d'une céramique préfrittée ; et
- traitement de la céramique préfrittée avec une solution à base d'acide carbonique, de façon préférée d'acide citrique, la concentration d'acide carbonique se situant dans la solution entre 20 et 65 % en poids, de façon préférée entre 40 et 55 % en poids et de façon particulièrement préférée à 50 % en poids.

2. Procédé pour augmenter la résistance de céramiques selon la revendication 1, comprenant en outre l'étape suivante :
- frittage final de la céramique préfrittée traitée avec la solution à base d'acide carbonique.

3. Procédé pour augmenter la résistance de céramiques selon l'une quelconque des revendications précédentes, les céramiques étant des céramiques dentaires ou des céramiques techniques.

4. Procédé pour augmenter la résistance de céramiques selon l'une quelconque des revendications précédentes, comprenant en outre l'étape suivante :
- traitement de la céramique préfrittée avant le traitement avec une solution pour former une céramique d'armature.

5. Procédé pour augmenter la résistance de céramiques selon l'une quelconque des revendications précédentes, comprenant en outre l'étape suivante :
- traitement de la céramique par immersion dans la solution.

6. Procédé pour augmenter la résistance de céramiques selon la revendication 5, comprenant en outre l'étape suivante :
- application sous pression de la solution sur la céramique pendant le processus d'immersion.

7. Procédé pour augmenter la résistance de céramiques selon l'une quelconque des revendications précédentes, comprenant en outre l'étape suivante :
- traitement de la céramique préfrittée avec au moins une solution supplémentaire différente de la première solution.

8. Procédé pour augmenter la résistance de céramiques selon l'une quelconque des revendications précédentes, l'acide carbonique étant un acide acétique, un acide butyrique, un acide salicylique, un acide aconitique ou un acide citrique.

9. Procédé pour augmenter la résistance de céramiques selon l'une quelconque des revendications précédentes, les céramiques préfrittées étant des matériaux de céramique oxydée à pores ouverts, de façon préférée 3Y-TZP-A, ATZ, Al203 sous une forme opaque et translucide, des céramiques à phase vitreuse ou des céramiques à dispersion.

10. Procédé pour augmenter la résistance de céramiques selon l'une quelconque des revendications précédentes, des composants colorés étant contenus dans la solution.

11. Procédé pour augmenter la résistance de céramiques selon l'une quelconque des revendications précédentes, comprenant en outre l'étape suivante :
- amenée de composants colorés sous forme dissoute dans la céramique par immersion ou infiltration avec ou sans application de pression.

12. Céramique préfrittée infiltrée avec une solution à base d'acide carbonique, notamment d'acide citrique, la concentration d'acide carbonique dans la solution étant comprise, après le préfrittage, entre 20 et 65 % en poids, de façon préférée entre 40 et 55 % en poids et étant de façon particulièrement préférée de 50 % en poids.
